# EUROPEAN PATENT SPECIFICATION

(11) **EP 3 296 517 B1**
(45) Date of publication and mention of the grant of the patent: **25.03.2020**
(21) Application number: 17191555.6
(22) Date of filing: 18.09.2017
(51) Int. Cl.: F01D 9/06, F02C 7/06, F02C 7/18, F02C 7/24

(54) **GEARED TURBOFAN FRONT CENTER BODY THERMAL MANAGEMENT**
THERMALMANAGEMENT EINES VORDEREN ZENTRALKÖRPERS EINES GETRIEBEFANS
GESTION THERMIQUE DE CORPS CENTRAL AVANT DE TURBORÉACTEUR À DOUBLE FLUX À ENGRENAGE

(30) Priority: 19.09.2016 US 201615269342
(43) Date of publication of application: 21.03.2018
(73) Proprietor: United Technologies Corporation, Farmington, CT 06032 (US)
(72) Inventor: McCUNE, Michael E., Colchester, CT Connecticut 06415 (US); SUCIU, Gabriel L., Glastonbury, CT Connecticut 06033 (US)
(74) Representative: Dehns

(56) References cited:
- US-A1- 2012 263 579
- US-A1- 2014 205 447
- US-A1- 2015 337 682
- US-A1- 2016 108 758

## Description

### BACKGROUND

The present invention relates generally to gas turbine engines and, more particularly, to thermal management of a front center body support section.

Heat from hot oil in a fan bearing cavity can be transferred through an inner diameter wall of a gas turbine engine front center body to an air flow along the inner diameter wall entering a compressor section. The resultant increased temperature of the air flow can reduce efficiency of the compressor. Additionally, a difference in temperature between the air flow at the inner diameter wall and an air flow at an outer diameter wall can cause distortion to the compressor section structures.

US 2014/205447 A1 discloses a prior art assembly as set forth in the preamble of claim 1.

US 2015/337682 A1 discloses a prior art cooling architecture for turbine exhaust case.

US 2012/263579 A1 discloses a prior art gas turbine engine front center body architecture.

### SUMMARY

In one aspect, the invention provides an assembly for use in a gas turbine engine as recited in claim 1.

In another aspect, there is also provided a method for reducing heat transfer from a bearing cavity to an inner annular wall of a center body support section of a gas turbine engine as recited in claim 7.

Features of embodiments of the invention are set forth in the dependent claims.

The present summary is provided only by way of example, and not limitation. Other aspects of the present disclosure will be appreciated in view of the entirety of the present disclosure, including the entire text, claims and accompanying figures.

### BRIEF DESCRIPTION OF THE DRAWINGS

FIG. 1 is a schematic quarter-sectional view of a gas turbine engine.
FIG. 2 is an exploded schematic cross-sectional view of a front center body support of the gas turbine engine of FIG. 1.
FIG. 3 is a perspective view of the front center body support.
FIG. 4 is a schematic cross-sectional view of the front center body support showing a fan air flowpath, taken along the line 4-4 of FIG. 3.

While the above-identified figures set forth embodiments of the present invention, other embodiments are also contemplated, as noted in the discussion. In all cases, this disclosure presents the invention by way of representation and not limitation. The figures may not be drawn to scale, and applications and embodiments of the present invention may include features, steps and/or components not specifically shown in the drawings.

### DETAILED DESCRIPTION

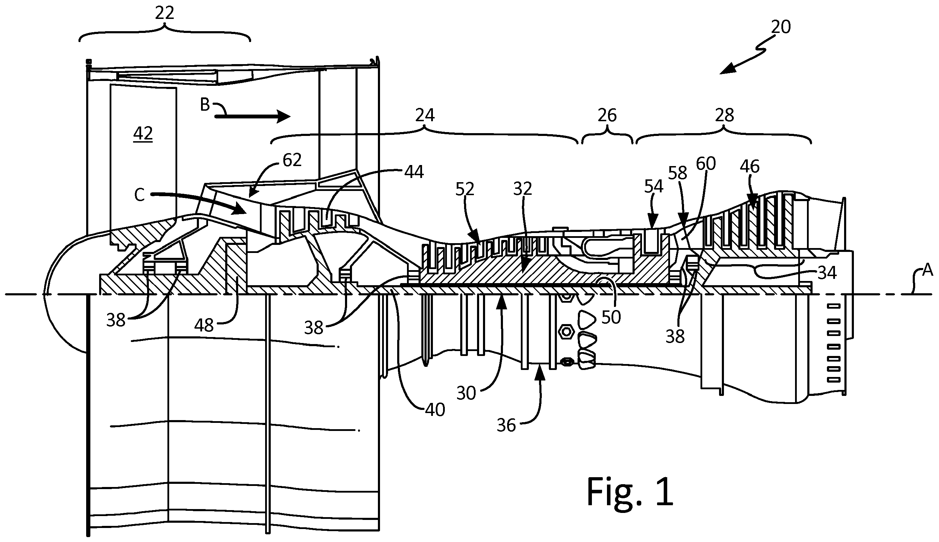

FIG. 1 is a quarter-sectional view of a gas turbine engine 20 that includes fan section 22, compressor section 24, combustor section 26 and turbine section 28. Alternative engines might include an augmenter section (not shown) among other systems or features. Fan section 22 drives air along bypass flow path B while compressor section 24 draws air in along core flow path C where air is compressed and communicated to combustor section 26. In combustor section 26, air is mixed with fuel and ignited to generate a high pressure exhaust gas stream that expands through turbine section 28 where energy is extracted and utilized to drive fan section 22 and compressor section 24.

Although the disclosed non-limiting embodiment depicts a turbofan gas turbine engine, it should be understood that the concepts described herein are not limited to use with turbofans as the teachings may be applied to other types of turbine engines; for example a low-bypass turbine engine, or a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section.

The example engine 20 generally includes low speed spool 30 and high speed spool 32 mounted for rotation about an engine central longitudinal axis A relative to an engine static structure 36 via several bearing systems 38. It should be understood that various bearing systems 38 at various locations may alternatively or additionally be provided.

Low speed spool 30 generally includes inner shaft 40 that connects fan 42 and low pressure (or first) compressor section 44 to low pressure (or first) turbine section 46. Inner shaft 40 drives fan 42 through a speed change device, such as gear system 48, to drive fan 42 at a lower speed than low speed spool 30. High-speed spool 32 includes outer shaft 50 that interconnects high pressure (or second) compressor section 52 and high pressure (or second) turbine section 54. Inner shaft 40 and outer shaft 50 are concentric and rotate via bearing systems 38 about engine central longitudinal axis A.

Combustor 26 is arranged between high pressure compressor 52 and high pressure turbine 54. In one example, high pressure turbine 54 includes at least two stages to provide a double stage high pressure turbine 54. In another example, high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about 5. The pressure ratio of the example low pressure turbine 46 is measured prior to an inlet of low pressure turbine 46 as related to the pressure measured at the outlet of low pressure turbine 46 prior to an exhaust nozzle.

Mid-turbine frame 58 of engine static structure 36 is arranged generally between high pressure turbine 54 and low pressure turbine 46. Mid-turbine frame 58 further supports bearing systems 38 in turbine section 28 as well as setting airflow entering low pressure turbine 46.

Front center body support 62 of engine static structure 36 is arranged generally between fan 42 and low pressure compressor section 44. Front center body support 62 further supports bearing systems 38 in fan section 22 as well as setting airflow entering low pressure compressor 44.

The core airflow C is compressed by low pressure compressor 44 then by high pressure compressor 52 mixed with fuel and ignited in combustor 26 to produce high speed exhaust gases that are then expanded through high pressure turbine 54 and low pressure turbine 46.

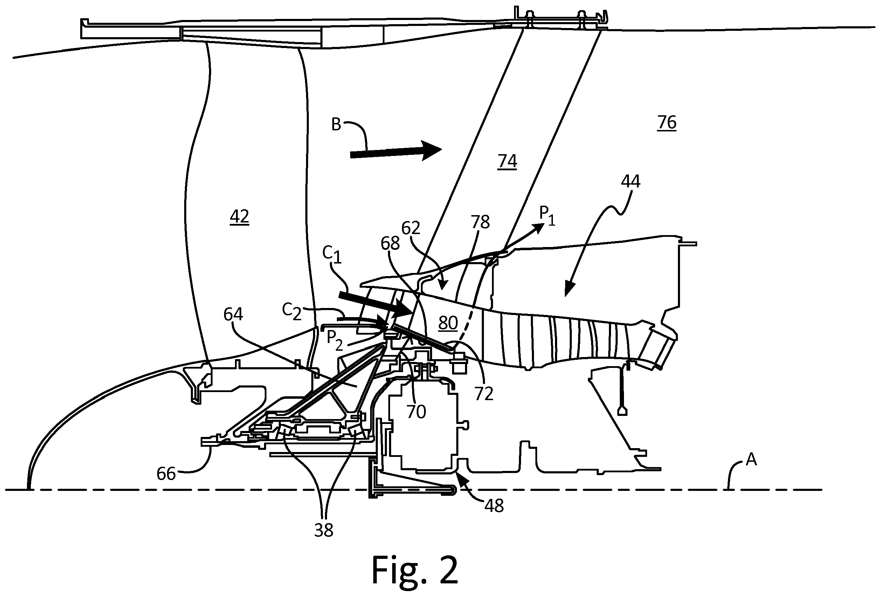

FIG. 2 is an exploded cross-sectional view of front center body support 62. Although the disclosed embodiments are described as relating to a front center body support of a gas turbine engine, it will be understood by those skilled in the art that the design disclosed for front center body support 62 can be implemented in other parts of the engine. FIG. 2 shows fan 42, bearings 38, bearing cavity 64, front center body support 62, and fan drive gear system (FDGS) 48. Bearings 38 support the rotation of shaft 66, which connects with FDGS 48 to drive fan 42. Cooling oil for bearings 38 and FDGS 48 is contained within bearing cavity 64, in part, by heat shield 68 of front center body support 62. Oil sprayed during operation, can contact heat shield 68 as indicated by arrow 70. During normal operations, the temperature of the oil can be over 200 degrees Fahrenheit (93 degree Celsius). Heat shield 68 can shield inner diameter wall 72 of front center body support 62 from contacting the hot oil and thereby, limit heat transferred to inner diameter wall 72 and through inner diameter wall 72 to core airflow C in flow path C₁. In the absence of heat shield 68, heat from the oil can be transferred to core airflow C, causing distortion and reducing efficiency of low pressure compressor 44.

As shown in FIG. 2, a fan air flow is divided into three flow paths, indicated by arrows B, C₁, and C₂. Flow path B exits the fan through fan exit guide vane 74 to bypass duct 76. Core air flow C is divided into flow path C₁ and C₂. Flow path C₁ extends through front center body support 62 and enters low pressure compressor 44. Flow path C₂ enters a cavity formed between heat shield 68 and inner diameter wall 72. Air flow through flow path C₂ exits front center body 62 through hollow struts (not labeled) and is discharged into bypass duct 76 aft of fan exit guide vane 74. A dynamic pressure P₁ in the bypass duct can be lower than a dynamic pressure P₂ at an inlet of front center body support 62, which can cause air flow to be driven through flow path C₂ during operation. Air flow through flow path C₂ can provide an insulating layer between heat shield 68 and inner diameter wall 72, thereby reducing heat transfer from oil in bearing cavity 64 to inner diameter wall 72. Additionally, because air is moving through flow path C₂, heat transferred to the air flow in flow path C₂ via convection can be removed from front center body support 62 with discharge of the heated air flow to bypass duct 76.

Generally, less than five percent of core air flow C (by volume) enters flow path C₂. The remaining air flow can enter low pressure compressor 44 through flow path C₁. Pressures P₁ and P₂ can vary. As long as P₁ is less than P₂, air flow can be driven through flow path C₂ without additional assistance.

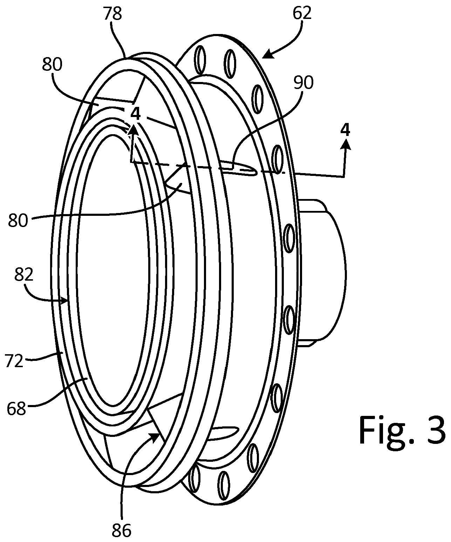

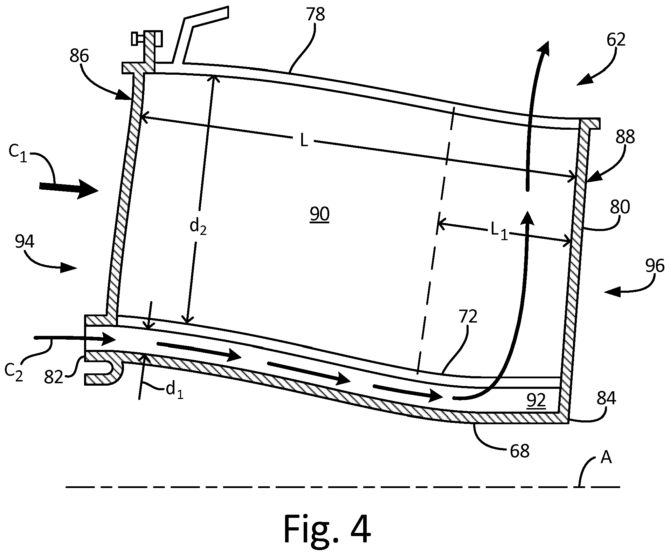

FIG. 3 is a perspective view of front center body support 62. Front center body support 62 includes inner diameter wall 72, outer diameter wall 78, struts 80, and heat shield 68. As shown in FIG. 3, inner and outer diameter walls 72 and 78 and heat shield 68 can be solid annular structures. Heat shield 68 can be integrally formed with or attached to inner diameter wall 72, providing a double wall at the inner diameter of front center body 62. Generally, front center body support 62, including inner and outer annular walls 72 and 78 and heat shield 68 can have a frustoconical shape with diameters of each annular structure 68, 72, and 78 decreasing from a forward end to an aft end of front center body 62, as can be seen in FIG. 1. As shown in FIG. 4, forward edge 82 of heat shield 68 can be disposed radially outward of aft edge 84 of heat shield 68, and inner and outer diameter walls 72 and 78 can have substantially the same frustoconical shape as heat shield 68. Returning to FIG. 3, outer diameter wall 78 is disposed radially outward of inner diameter wall 72 and is connected to inner diameter 72 by a plurality of struts 80. In some embodiments, eight or nine struts can be positioned in an equally spaced arrangement around an inner circumference of outer diameter wall 78 to provide structural stability to front center body support 62 and to direct air flow to low pressure compressor 44. As shown in FIG. 3, struts can have an aerodynamic structure, such as an airfoil shape, including leading edge 86 and trailing edge 88 (shown in FIG. 4).

The struts 80 are hollow, having passageway 90, and form a portion of flow path C₂. As shown in FIG. 3, passageway 90 opens to an outer circumferential surface of outer diameter wall 78 at one end of strut 80 (e.g., an outer end). At an opposite, inner end of strut 80, passageway 90 opens to cavity 92 formed between heat shield 68 and inner diameter wall 72 (shown in FIG. 4).

FIG. 4 is a cross-sectional schematic view of front center body support 62, showing flow paths C₁ and C₂, taken along the line 4-4 of FIG. 3. As shown in FIG. 4, cavity 92 is formed between heat shield 68 and inner diameter wall 72. The portion of fan air generally forming core air flow C can be divided between flow paths C₁ and C₂ at forward face 94 of front center body support 62. Cavity 92 can be open to core air flow C at forward face 94 along a full circumference of annular heat shield 68. Cavity 92 can be fully closed at aft face 96 of front center body 62, as shown in FIG. 4, forcing air to flow through passageway 90 of strut 80. In alternative embodiments, vanes can be used to secure heat shield 68 to inner diameter wall 72 and direct air flow into cavity 92.

As shown in FIG. 4, heat shield 68 can be disposed at a uniform radial distance (d₁) from inner diameter wall 72, such that a thickness of cavity 92 does not change in the axial or circumferential directions, thereby providing a substantially uniform insulating layer along inner diameter wall 72. Generally, the radial distance (d₁) between heat shield 68 and inner diameter wall 72 can be large enough to accommodate an air flow volume of up to five percent of core air flow C, with the distance (d₁) not exceeding a quarter of the radial distance d₂ measured between inner diameter wall 72 and outer diameter wall 78. It will be understood by one of ordinary skill in the art to modify the radial distance between heat shield 68 and inner diameter wall 72 and air flow to flow path C₂, as needed to reduce heat transfer to air flow in flow path C₁ while improving overall engine efficiency.

As shown in FIG. 4, cavity 92 can extend from forward face 94 to a closure at aft face 96 to provide an insulating layer along a full length of front center body support 62. Passageway 90 can extend substantially a length (L) of strut 80 between leading edge 86 and trailing edge 88 to promote air flow to an aft end of the cavity (closure at aft face 96). In alternative embodiments, passageway 90 can extend a reduced length (L₁) of strut 80, provided passageway 90 is positioned adjacent an aft end of cavity 92, such that the air flow extends the axial length of cavity 92. Passageway 90 can have a variety of shapes. In some embodiments, passageway 90 can have a shape similar to strut 80. In some embodiments, passageway 90 can additionally include air or oil tubes. In some embodiments, a metering section can be included as needed to maintain an adequate pressure differential (P₂>P₁) to drive air flow through flow path C₂ to bypass duct 76. It will be understood by one of ordinary skill in the art to modify passageway 90 as necessary to provide structural stability and sufficient air flow. Because heat shield 68 is positioned radially inward of inner diameter wall 72, heat shield 68 blocks lubricating spray from entering passageway 90, while allowing air to flow through passageway 90.

Performance of the low pressure compressor 44 can be improved by reducing heat transferred to core air flow C entering low pressure compressor 44 from flow path C₁. The addition of heat shield 68 and air flow path C₂ can limit heat transfer to core air flow C in flow path C₁ by providing an insulating layer between bearing cavity 64 and inner diameter wall 72 of front center body 62 and by discharging air heated by convection in flow path C₂ to bypass duct 76.

The invention includes all embodiments falling within the scope of the appended claims.

## Claims

1. An assembly for use with a gas turbine engine (20), the assembly comprising:
a center body support section (62) comprising:
an inner annular wall (72) having a first forward edge;
an outer annular wall (78) disposed radially outward of the inner annular wall (72);
a plurality of struts (80) connecting the inner and outer annular walls (72, 78); and
a heat shield (68) having a second forward edge (82), the heat shield (68) being disposed radially inward of and connected to the inner annular wall (72), such that a cavity (92) is formed between the heat shield (68) and the inner annular wall (72), wherein the cavity (92) is open to an air flow (C) at a forward face (94) of the center body support section (62), wherein
the first forward edge of the inner annular wall (72) and the second forward edge (82) of the heat shield (68) are aligned axially, wherein the plurality of struts (80) includes hollow struts (80) open to the cavity (92) formed between the inner annular wall (72) and the heat shield (68),
wherein the hollow struts (80) are open to an outer circumferential surface of the outer annular wall (78), and wherein a passageway (90) extends through each of the hollow struts (80) from the cavity (92) to the outer circumferential surface;
and in that the assembly further comprises:
a fan section (22), in which the center body support section (62) is located;
a first fan air flow path (C₁) extending between the inner and outer annular walls (72, 78) of the center body support section (62); and
a second fan air flow path (C₂) extending from the forward front face (94) through the cavity (92) and through the passageways (90) of the hollow struts (80) of the center body support section (62).

2. The assembly of claim 1 and further comprising:
a bypass duct (76) located radially outward of the center body, wherein the second fan air flow path (C₂) extends out of the center body support section (62) into the bypass duct (76).

3. The assembly of claim 1 or 2, wherein the center body support section (62) has a frustoconical shape.

4. The assembly of any preceding claim, wherein the second forward edge (82) of the heat shield (68) is disposed radially outward of an aft edge (84) of the heat shield (68).

5. The assembly of any preceding claim, wherein the heat shield (68) is disposed at a distance (d₁) from the inner annular wall (72) to allow passage of up to five percent by volume of a core air flow (C), the core air flow (C) being equal to the sum of the air flow through the first and the second fan air flow paths (C₁, C₂).

6. The assembly of any preceding claim, wherein the cavity (92) between the inner annular wall (72) and heat shield (68) is closed at an aft face (96) of the center body support section (62).

7. A method for reducing heat transfer from a bearing cavity (64) to an inner annular wall (72) of a center body support section (62) of a gas turbine engine (20), the method comprising:
shielding the inner annular wall (72) from hot lubricant with a shield (68) positioned between the inner annular wall (72) and the bearing cavity (64);
flowing a first portion of an air flow (C₁) between the inner annular wall (72) and an outer annular wall (78), the inner and outer annular walls (72, 78) separated by struts (80);
flowing a second portion of the air flow (C₂) between the inner annular wall (72) and the shield (68);
flowing the second portion of the air flow (C₂) through internal passageways (90) of at least a portion of the struts (80); and
convectively cooling the shield (68) with the second portion of the air flow (C₂);
discharging the second portion of the air flow (C₂) from the struts (80) to a bypass duct (76) of the gas turbine engine (20) at a location aft of a fan exit guide vane (74); and
generating the first and second portions of the air flow (C₁, C₂) from a fan (42) of the gas turbine engine (20).

8. The method of claim 7, wherein the second portion of the air flow (C₂) is approximately five percent by volume of a total air flow (C), the total air flow being equal to the sum of the first portion and the second portion (C₁, C₂).

## Patentansprüche

1. Anordnung zur Verwendung mit einem Gasturbinentriebwerk (20), wobei die Anordnung Folgendes umfasst:
einen Zentralkörperträgerabschnitt (62), umfassend:
eine innere ringförmige Wand (72) mit einer ersten vorderen Kante;
eine äußere ringförmige Wand (78), die radial außerhalb der inneren ringförmigen Wand (72) angeordnet ist;
eine Vielzahl an Streben (80), die die inneren und die äußeren ringförmigen Wände (72, 78) verbinden; und
einen Hitzeschild (68) mit einer zweiten vorderen Kante (82), wobei der Hitzeschild (68) radial innerhalb der inneren ringförmigen Wand (72) angeordnet und mit dieser verbunden ist, sodass ein Hohlraum (92) zwischen dem Hitzeschild (68) und der inneren ringförmigen Wand (72) bildet ist, wobei der Hohlraum (92) für einen Luftstrom (C) auf einer Stirnseite (94) des Zentralkörperträgerabschnitts (62) geöffnet ist, wobei die erste vordere Kante der inneren ringförmigen Wand (72) und die zweite vordere Kante (82) des Hitzeschilds (68) axial ausgerichtet sind, wobei die Vielzahl an Streben (80) hohle Streben (80) beinhaltet, die für den zwischen der inneren ringförmigen Wand (72) und dem Hitzeschild (68) gebildeten Hohlraum (92) geöffnet sind,
wobei die hohlen Streben (80) für eine äußere Umfangsfläche der äußeren ringförmigen Wand (78) geöffnet sind und wobei sich ein Durchgang (90) durch jede der hohlen Streben (80) von dem Hohlraum (92) zu der äußeren Umfangsfläche erstreckt;
und wobei die Anordnung ferner Folgendes umfasst:
einen Gebläseabschnitt (22) in dem sich der Zentralkörperträgerabschnitt (62) befindet;
einen ersten Gebläseluftströmungskanal (C₁), der sich zwischen den inneren und den äußeren ringförmigen Wänden (72, 78) des Zentralkörperträgerabschnitts (62) erstreckt; und
einen zweiten Gebläseluftströmungskanal (C₂), der sich von der vorderen Stirnseite (94) durch den Hohlraum (92) und durch die Durchgänge (90) der Hohle Streben (80) des Zentralkörperträgerabschnitts (62) erstreckt.

2. Anordnung nach Anspruch 1, ferner umfassend:
eine Umgehungsleitung (76), die sich radial außerhalb des Zentralkörpers befindet, wobei sich der zweite Gebläseluftströmungskanal (C₂) aus dem Zentralkörperträgerabschnitt (62) in die Umgehungsleitung (76) erstreckt.

3. Anordnung nach Anspruch 1 oder 2, wobei der Zentralkörperträgerabschnitt (62) kegelstumpfförmig ist.

4. Anordnung nach einem der vorhergehenden Ansprüche, wobei die zweite vordere Kante (82) des Hitzeschilds (68) radial außerhalb einer hinteren Kante (84) des Hitzeschilds (68) angeordnet ist.

5. Anordnung nach einem der vorhergehenden Ansprüche, wobei der Hitzeschild (68) in einem Abstand (d₁) von der inneren ringförmigen Wand (72) angeordnet ist, um den Durchgang von bis zu fünf Volumenprozent eines Kernluftstroms (C) zu ermöglichen, wobei der Kernluftstrom (C) gleich der Summe des Luftstroms durch den ersten und den zweiten Gebläseluftströmungskanal (C₁, C₂) ist.

6. Anordnung nach einem der vorhergehenden Ansprüche, wobei der Hohlraum (92) zwischen der inneren ringförmigen Wand (72) und dem Hitzeschild (68) an einer hinteren Stirnseite (96) des Zentralkörperträgerabschnitts (62) geschlossen ist.

7. Verfahren zum Reduzieren der Wärmeübertragung von einem Lagerhohlraum (64) zu einer inneren ringförmigen Wand (72) eines Zentralkörperträgerabschnitts (62) eines Gasturbinentriebwerks (20), wobei das Verfahren Folgendes umfasst:
das Abschirmen der inneren ringförmigen Wand (72) von heißem Schmiermittel mit einem Schild (68), der zwischen der inneren ringförmigen Wand (72) und dem Lagerhohlraum (64) positioniert ist;
das Strömen eines ersten Abschnitts des Luftstroms (C₁) zwischen der inneren ringförmigen Wand (72) und einer äußeren ringförmigen Wand (78), wobei die inneren und die äußeren ringförmigen Wände (72, 78) durch Streben (80) geteilt sind;
das Strömen eines zweiten Abschnitts des Luftstroms (C₂) zwischen der inneren ringförmigen Wand (72) und dem Schild (68) ;
das Strömen eines zweiten Abschnitts des Luftstroms (C₂) durch innere Durchgänge (90) von mindestens einem Abschnitt der Streben (80); und
konvektives Kühlen des Schilds (68) mit dem zweiten Abschnitt des Luftstroms (C₂);
Ableiten des zweiten Abschnitts des Luftstroms (C₂) von den Streben (80) in eine Umgehungsleitung (76) des Gasturbinentriebwerks (20) an einer Stelle hinter einer Gebläseauslassleitschaufel (74); und
Erzeugen des ersten und des zweiten Abschnitts des Luftstroms (C₁, C₂) von einem Gebläse (42) des Gasturbinentriebwerks (20) .

8. Verfahren nach Anspruch 7, wobei der zweite Abschnitt des Luftstroms (C₂) ungefähr fünf Volumenprozent eines gesamten Luftstroms (C) entspricht, wobei der gesamte Luftstrom gleich der Summe des ersten und des zweiten Abschnitts (C₁, C₂) ist.

## Revendications

1. Ensemble pour son utilisation avec un moteur à turbine à gaz (20), l'ensemble comprenant :
une section de support de corps central (62) comprenant :
une paroi annulaire intérieure (72) ayant un premier bord vers l'avant ;
une paroi annulaire extérieure (78) disposée radialement vers l'extérieur de la paroi annulaire intérieure (72) ;
une pluralité d'entretoises (80) raccordant les parois annulaires intérieure et extérieure (72, 78) ; et
un bouclier de protection thermique (68) ayant un second bord vers l'avant (82), le bouclier de protection thermique (68) étant disposé radialement vers l'intérieur de et raccordé à la paroi annulaire intérieure (72), de sorte qu'une cavité (92) est formée entre le bouclier de protection thermique (68) et la paroi annulaire intérieure (72), dans lequel la cavité (92) est ouverte sur un écoulement d'air (C) au niveau d'une face vers l'avant (94) de la section de support de corps central (62), dans lequel
le premier bord vers l'avant de la paroi annulaire intérieure (72) et le second bord vers l'avant (82) du bouclier de protection thermique (68) sont alignés axialement,
dans lequel la pluralité d'entretoises (80) comporte des entretoises creuses (80) ouvertes sur la cavité (92) formée entre la paroi annulaire intérieure (72) et le bouclier de protection thermique (68),
dans lequel les entretoises creuses (80) sont ouvertes sur une surface circonférentielle extérieure de la paroi annulaire extérieure (78), et dans lequel une voie de passage (90) s'étend à travers chacune des entretoises creuses (80) de la cavité (92) à la surface circonférentielle extérieure ;
et l'ensemble comprend en outre :
une section de soufflante (22), dans laquelle la section de support de corps central (62) est située ;
un premier chemin d'écoulement d'air de soufflante (C₁) s'étendant entre les parois annulaires intérieure et extérieure (72, 78) de la section de support de corps central (62) ; et
un second chemin d'écoulement d'air de soufflante (C₂) s'étendant depuis la face avant vers l'avant (94) à travers la cavité (92) et à travers les voies de passage (90) des entretoises creuses (80) de la section de support de corps central (62).

2. Ensemble selon la revendication 1, et comprenant en outre : une conduite de dérivation (76) située radialement vers l'extérieur du corps central, dans lequel le second chemin d'écoulement d'air de soufflante (C₂) s'étend hors de la section de support de corps central (62) dans la conduite de dérivation (76).

3. Ensemble selon la revendication 1 ou 2, dans lequel la section de support de corps central (62) a une forme tronconique.

4. Ensemble selon une quelconque revendication précédente, dans lequel le second bord vers l'avant (82) du bouclier de protection thermique (68) est disposé radialement vers l'extérieur d'un bord arrière (84) du bouclier de protection thermique (68).

5. Ensemble selon une quelconque revendication précédente, dans lequel le bouclier de protection thermique (68) est disposé à une distance (d₁) de la paroi annulaire intérieure (72) pour permettre le passage de jusqu'à cinq pour cent en volume d'un écoulement d'air primaire (C), l'écoulement d'air primaire (C) étant égal à la somme de l'écoulement d'air à travers les premier et second chemins d'écoulement d'air de soufflante (C₁, C₂) .

6. Ensemble selon une quelconque revendication précédente, dans lequel la cavité (92) entre la paroi annulaire intérieure (72) et le bouclier de protection thermique (68) est fermée au niveau d'une face arrière (96) de la section de support de corps central (62).

7. Procédé de réduction de transfert de chaleur d'une cavité de palier (64) à une paroi annulaire intérieure (72) d'une section de support de corps central (62) d'un moteur à turbine à gaz (20), le procédé comprenant :
la protection de la paroi annulaire intérieure (72) vis-à-vis d'un lubrifiant chaud avec un bouclier de protection (68) positionné entre la paroi annulaire intérieure (72) et la cavité de palier (64) ;
l'écoulement d'une première portion d'un écoulement d'air (C₁) entre la paroi annulaire intérieure (72) et une paroi annulaire extérieure (78), les parois annulaires intérieure et extérieure (72, 78) étant séparées par des entretoises (80) ;
l'écoulement d'une seconde portion de l'écoulement d'air (C₂) entre la paroi annulaire intérieure (72) et le bouclier de protection (68) ;
l'écoulement de la seconde portion de l'écoulement d'air (C₂) à travers des voies de passage internes (90) d'au moins une portion des entretoises (80) ; et
le refroidissement par convection du bouclier de protection (68) avec la seconde portion de l'écoulement d'air (C₂) ;
l'évacuation de la seconde portion de l'écoulement d'air (C₂) des entretoises (80) à une conduite de dérivation (76) du moteur à turbine à gaz (20) à un emplacement à l'arrière d'une aube de guidage de sortie de soufflante (74) ; et
la génération des première et seconde portions de l'écoulement d'air (C₁, C₂) à partir d'une soufflante (42) du moteur à turbine à gaz (20).

8. Procédé selon la revendication 7, dans lequel la seconde portion de l'écoulement d'air (C₂) est d'approximativement cinq pour cent en volume d'un écoulement d'air total (C), l'écoulement d'air total étant égal à la somme de la première portion et de la seconde portion (C₁, C₂) .
